# EUROPEAN PATENT SPECIFICATION

(11) **EP 3 292 160 B1**
(45) Date of publication and mention of the grant of the patent: **13.03.2019**
(21) Application number: 16727568.4
(22) Date of filing: 05.05.2016
(51) Int. Cl.: C08F 283/01, C09D 151/08, C09D 167/08, C08L 67/06, C09D 167/06

(54) **COATING COMPOSITIONS**
BESCHICHTUNGSZUSAMMENSETZUNGEN
COMPOSITIONS DE REVÊTEMENT

(30) Priority: 05.05.2015 US 201562157044 P
(43) Date of publication of application: 14.03.2018
(73) Proprietor: The Sherwin-Williams Company, Cleveland, OH 44115 (US)
(72) Inventor: PARISH, David, M., Shaker Heights, OH 44122 (US); ANWER, Razi, Bloomington, Indiana 47403 (US)
(74) Representative: Dannenberger, Oliver Andre
(86) International application number: PCT/US2016/030875
(87) International publication number: WO 2016/179341

(56) References cited:
- WO-A1-03/099257
- US-A- 4 293 636
- US-A1- 2002 161 138
- US-A1- 2004 220 340

## Description

### FIELD OF INVENTION

Applicants have found that coating compositions comprising polymerizable polyesters and a multifunctional (meth)acrylate monomer, as well as a reactive monofunctional (meth)acrylate monomer or oligomer selected from the group consisting of allyl (meth)acrylate, cyclohexyl (meth)acrylate and tetrahydrofurfuryl (meth)acrylate, even in the substantial absence of acetoacetate functional monomers and styrene, provide formulations having favorable manufacturing characteristics and having enhanced dry time performance, all while maintaining comparable to improved crosslink density and shrink resistance, chemical resistance, and heat resistance of the cured coating.

In general, the coating compositions of the present invention include from about 10 weight percent to about 90 weight percent of polymerizable polyester resin and from about 10 weight percent to about 60 weight percent of a reactive multifunctional (meth)acrylate. As used herein the term "reactive multifunctional (meth)acrylate" refers to compounds that have at least two (meth)acrylate functionalities that are reactive, under the conditions used to cure the coating, with at least one of the compounds involved in the curing reaction or formed by the curing reaction. Reactive multifunctional (meth)acrylates may include di- or tri- or tetra- or penta-(meth)acrylate monomers.

Substantially styrene-free resin compositions comprising unsaturated polyesters, multifunctional acrylate monomers, allyl ether monomers and acetoacetate functional monomers are known, as taught, for example in U.S. Patent 8,957,164. These formulations demonstrate good performance compared to comparable styrenated formulations; however, there remains a strong interest to improve the properties and performance of these coatings, including, without limitation, the dry time. Applicants have found that exceptional results, including crosslinking density and improved dry time, can be achieved in accordance with the present invention by use of the present reactive multifunctional (meth)acrylate monomers with polymerizable resins comprising polymerizable polyester compounds, in combination with a monofunctional acrylate monomer or oligomer according to claim 1. Surprisingly, certain characteristics of the present formulations are improved over former formulations comprising acetoacetate functional monomers. Furthermore, applicants have discovered that unexpectedly superior performance is possible when the polymerizable polyester compounds are present in the coating compositions in amounts of from about 20 weight percent to about 90 weight percent, particularly when such amounts are used in combination with a substantially styrene-free reactive diluent, such as trimethylolpropane triacrylate, neopentyl glycol diacrylate, pentaerythritol tetraacrylate, dipentaeryrthritol pentaacrylate, preferably 1,6-hexanediol diacrylate in a vinyl ester:reactive diluent weight ratio of from about 20 weight percent to about 50 weight percent. Furthermore, applicants have found that unexpectedly superior results are generally achieved when the polymerizable polyester compounds with substantially styrene-free reactive multifunctional (meth)acrylate monomer diluents and a monofunctional methacrylate such as tetrahydrofurfuryl methacrylate are present in the coating compositions, as more particularly defined hereinafter.

One aspect of the present invention provides a coating composition comprising polymerizable polyester comprising one or more repeating units and at least one terminal vinyl carboxylate, preferably a C3-C6 vinyl carboxylate, where the ratio of the number of repeating units to the number of terminal vinyl carboxylate units is, on average in the composition, from about 1 weight percent to about 10 weight percent.

Generally, the compositions of the present invention also include an ethylenically unsaturated monomer, preferably a multifunctional di- or tri- or tetra- or penta-(meth)acrylate monomer, such as HDDA, that is reactive with the polymerizable polyester and compatible with the optionally provided reactive diluents. In certain aspects of the present invention, the reactive diluent and the total resin system is substantially free of styrene. By "substantially free of styrene" or "substantially styrene-free" means that the resin composition is free of styrene to less than 0.5 weight percent styrene. In certain aspects of the present invention, the total resin system is substantially free of acetoacetate functional monomers. By "substantially free of acetoacetate functional monomers", it is meant that the resin composition is free of acetoacetate functional monomers to less than 0.5 weight percent acetoacetate functional monomers.

Optionally, the present compositions also include a curing initiator, curing promoter, pigments and/or fillers.

In terms of active components, the present compositions comprise at least one polymerizable compound, preferably in the form of a resin. Although the remainder of this specification will refer to compositions based on polyester resins, it will be appreciated by those skilled in the art that the descriptions contained herein with respect to polyester resins can be adapted for use in connection with other types of unsaturated polyester resins, to also include vinyl ester resins, to also include vinyl ester novolac resins, isophthalic polyester resins, and to also include organic and inorganic hybrids such as unsaturated polyester silicone hybrids, which contain a substantially silicone backbone, with di, tri, and tetra functional unsaturated ester groups formed through reaction of methacrylic acid with primary hydroxyl groups at terminal positions on the substantially silicone backbone.

The present compositions comprise at least one polymerizable polyester compound and optionally but preferably a reactive diluent for the polymerizable polyester compound. Other active components that are included in certain preferred embodiments include, but are not limited to, initiators (preferably free-radical polymerization initiators), chain transfer agents, inhibitor (preferably a free-radical inhibitor), accelerators, promoters, cross linking agents and coupling agents. In terms of inactive components, it is desirable in certain embodiments to include in the composition color pigments, non reactive fillers, nonreactive diluents, thixotropic agents, antifoaming agents, wetting agents, solvents and antibacterial agents.

It is contemplated that the relative proportions of the components included in the present compositions may vary widely depending on numerous factors, such as for example the contemplated environment of use, the desired strength of the matrix to be formed, the particular materials to be coated, i.e. substrates, and other factors, Nevertheless, the preferred aspects of the present coating compositions comprise from about 25 weight percent to about 85 weight percent of polymerizable polyester compounds.

As described above, the present compositions preferably contain polymerizable polyester compound in the form of vinyl ester resin, vinyl ester novolac resin, unsaturated isophthalic polyester resin, unsaturated polyester silicone resin which includes reactive diluent. Although the relative amounts of reactive diluent may vary widely within the scope hereof, it is generally preferred that the reactive unsaturated polyester comprise from about 50 weight percent to about 70 weight percent, on the basis of the total weight of the resin, reactive diluent comprise from about 20 weight percent to about 40 weight percent, with the balance preferably consisting essentially of other adjunct compounds, as described above. In certain embodiments, the coating compositions can comprise from about 60 weight percent to about 65 weight percent of unsaturated polymerizable polyester resin.

### The Polymerizable Polyester Compound

It is contemplated that known methods for formation of polymerizable polyester compounds and resins can be adapted in view of the teachings contained herein to form compounds and resins in accordance with the present invention, and all such materials are considered to be within the scope hereof. In one embodiment, the polymerizable polyester of the present invention is formed by the reaction of a dihydric compound with an ethylenically unsaturated carboxylic acid, anhydride or alcohol, usually with the use of a polymerization inhibitor to prevent the polyester resin from gelling. In view of the teaching contained herein, it is believed that polyester resin in accordance with the present invention may be prepared by any of the methods disclosed in any of the following patents : U.S. Pat. No. 5,456,947 to Parish and U.S. Pat. No. 5,549,969 to Parish, both assigned to Fibre Glass-Evercoat Company, Inc.

The vinyl ester resin can be based on the reaction of bisphenol A (or bisphenol F or bisphenol S) and an ethylenically unsaturated diacid or anhydride. Other suitable unsaturated polyester resins which can be utilized in the present invention are well known and include products of the condensation reaction of low molecular weight diols, (that is, diols containing from about 2 to 12 carbon atoms and desirably from 2 to 6 carbon atoms) with dicarboxylic acids or their anhydrides containing from 3 to 12 carbon atoms and preferably from 4 to 8 carbon atoms provided that at least 50 mole percent of these acids or anhydrides contain ethylenic unsaturation. Examples of diols include 1,2-propylene glycol, ethylene glycol, 1,3-propylene glycol, diethylene glycol, di-1,2 -propylene glycol, 1,4-butanediol, 1,6-hexanediol, neopentyl glycol, and the like or mixtures thereof. Acids useful for this invention include (meth) acrylic acid, fumaric acid, itaconic acid, terephthalic acid,maleic acid and anhydrides thereof. Often, mixtures of acids and/or anhydrides are utilized with the preferred acids or anhydrides and such compounds include phthalic anhydride, isophthalic acid, terephthalic acid, adipic acid, glutaric acid, and the like, catalyzed by compounds such as organotitanates and organo tin compounds such as tetrabutyl titanate or dibutyl tin oxide, and the like.

Vinyl ester resins can also be prepared by reacting epoxy resins such as the addition products of 1-chloro-2,3-epoxypropane with 2, 2'-bis(4-hydroxyphenyl)propane with either methacrylic or acrylic acid.

An epoxy vinyl ester can be prepared by reacting the polyepoxide and the acid or derivative thereof in appropriate amounts, generally with heating and in the presence of a catalyst, such as a trivalent chromium salt, as for example CrCl₃; or a phosphine; alkali, onium salt; or a tertiary amine, for example, tris(N,N-dimethylaminomethyl phenol). Optionally, the epoxy vinyl ester resin can be formed in the presence of a non-resinous, substantially styrene-free vinyl monomer. The resulting product, which is a combination of the polymerizable vinyl ester and reactive diluent, will, in such an instance, constitute what is referred to as an "epoxy vinyl ester resin."

Examples of epoxy compounds which may be used in such formation reactions include but are not limited to those found in bisphenolic type epoxy resins, epoxy novolac type resins, amine type epoxy resins, copolymerized epoxy resins, multifunctional epoxy resins and the like. Preferably the epoxy used to form the present polymerizable vinyl ester has about 2 to about 3 of an average number of epoxy groups in the molecule.

The bisphenolic type epoxy resin compounds which may be used include, but are not limited to, those found in bisphenol A, F and S type epoxy resins, each of such compounds preferably having 2 glycidyl groups in its molecule. Commercially available examples of bisphenol A type epoxy resin include those available from Ashland Inc. under the trade designation DERAKANE® 411 epoxy vinyl ester resin. Commercially available examples of bisphenol F type epoxy resins and bisphenol S type epoxy resins may also be used.

Epoxy novolac type resin compounds may also be used, and such resins are exemplified by phenolic novolac, cresolic novolac, aliphatic, alicyclic or monocyclic epoxy resins. Commercially available example of a novolac epoxy-based vinyl ester is Ashland Inc.'s DERAKANE® MOMENTUM 470 epoxy vinyl ester resin.

Aliphatic type epoxy resin compounds may also be used, and such resins include, among others, hydrogenated bisphenol A type epoxy resin having 2 glycidyl groups in its molecule.

Alicyclic epoxy type resin compounds may also be used, and such resin compounds include, among others, alicyclic diepoxyacetal, dicyclopentadiene dioxide and vinylcyclohexene dioxide and the like, which have 2 epoxy groups in the molecule. Such epoxy resin compounds having one epoxy group in the molecule includes vinylhexene monoxide, glycidyl methacrylate and the like.

Monocyclic epoxy type resin compounds may also be used, and such resin compounds include, among others, resorcinol diglycidyl ether, diglycidyl terephthalate and the like.

Amine type epoxy resin compounds may also be used, and such resin compounds include, among others, compounds having 4 glycidyl groups in the molecule.

These epoxy resins type compounds can be used alone or in combination. The average number of glycidyl groups in the molecule of the epoxy resin is preferably from about 1 to about 6, more preferably from about 2 to about 4, and even more preferably from about 2 to about 3.

### The Reactive Diluent

In general, it is contemplated that the teachings of the present invention can be used with great advantage in connection with any one of the large number of known reactive diluents, particularly reactive monomers. Example of reactive diluents which may be use in connection with the broad teachings hereof include, multifunctional (meth)acrylate monomers such as 1,4-butanediol diacrylate (BDDA), 1,6-hexanediol diacrylate (HDDA), diethylene glycol diacrylate, 1,3-butylene glycol diacrylate, neopentyl glycol diacrylate, cyclohexane dimethanol diacrylate, dipropylene glycoldiacrylate, ethoxylated bisphenol A diacrylate, trimethylolpropane triacrylate, pentaerythritol triacrylate, pentaerythritol tetraacrylate and their related (meth)acrylate derivatives. The preferred concentration of multifunctional (meth)acrylate in the present invention is about 25 weight percent to about 40 weight percent.

While it is contemplated that the amount of reactive diluent relative to the amount of polymerizable polyester in the composition may vary widely depending on numerous factors particular to each application and contemplated use, it is generally preferred that the vinyl ester:reactive diluent weight ratio is from about 2.33 to about 1.0, and optionally, the polymerizable vinyl ester is soluble in the reactive diluent.

### The Monofunctional (Meth)Acrylate

As used herein the term "reactive monofunctional (meth)acrylate" refers to compounds that have only one (meth)acrylate functionality that is reactive, under the conditions used to cure the coating, with at least one of the resin and reactive multifunctional (meth)acrylate diluent matrix.
The reactive monofunctional (meth)acrylate monomer is selected to have surface tendencies, which allow for inhibitive oxygen blocking, which also allows for surface curing to take effect, even in relatively thin films. Reactive monofunctional (meth)acrylates having these characteristics include allyl (meth)acrylate, cyclohexyl (meth) acrylate and tetrahydrofurfuryl (meth)acrylate. It can be appreciated by one skilled in the art that the reactive monofunctional (meth)acryiate may have relatively low volatility, and thus mostly polymerize into the system at the surface. For purposes hereof, "relatively low volatility" means Vapor Pressure at or below 0.1mm Hg @ 25°C.

The reactive monofunctional (meth)acrylate monomer may be employed in amounts for 0.5 to about 20 percent with respect to total resin weight.

### Initiator

The resin composition of this invention may be cured by a number of free-radical initiators, including peroxide initiators, Suitable peroxide initiators include diacylperoxides, hydroperoxides, ketone peroxides, peroxyesters, peroxyketals, dialkyl peroxides, alkyl peresters and percarbonates. Examples of these peroxides include methyl ethyl ketone peroxide (MEKP), benzoyl peroxide (BPO) and cumene hydroperoxide (CHP). Combinations of two or more peroxides may be used to cure the resin. Azo-type initiators include azobisisobutyronitrile (AIBN) and related compounds. These initiators are preferably used in the range of about 1-3 percent by weight. These resins may also be cured by irradiation with ultraviolet light or electron beam.

### RESULTS

Chemical resistance of a standard styrenated vinyl ester resin as compared to the substantially styrene-free vinyl ester resin of the invention are tested, with results as follows:

| Chemical | Styrene containing Vinyl Ester | Substantially Styrene Free Vinyl Ester |
|---|---|---|
| 1 00% Jet Fuel | 1.25% weight increase | 1.33% weight increase |
| 100% Methanol | 2,08% weight increase | 2.15% weight increase |
| 100% Ethanol | 4,13% weight increase | 3.84% weight increase |
| 12.5% Sodium Hypochlorite | 0.56% weight increase | -0.04% weight loss |

Many more chemicals were tested with both the styrenated vinyl ester resin and substantially styrene free vinyl ester resin with similar results; either the substantially styrene free was substantially the same or better than the styrenated control, These are to show indicative results.

Further, hardness and abrasion resistance of the substantially styrene-free vinyl ester resin is much improved over the styrenated vinyl ester, which is also indicative of higher temperature resistance of the polymer,

## Claims

1. An unsaturated polyester resin composition comprising:
(a) an unsaturated polyester,
(b) a reactive multifunctional (meth)acrylate monomer; and
(c) a reactive monofunctional (meth)acrylate monomer or oligomer,
wherein the resin composition is substantially free of styrene and acetoacetate functional monomers, and wherein the reactive monofunctional (meth)acrylate monomer or oligomer is selected from the group consisting of allyl (meth)acrylate, cyclohexyl (meth)acrylate, and tetrahydrofurfuryl (meth)acrylate.

2. The resin composition according to claim 1 wherein the concentration of the unsaturated polyester is from 10 weight percent to 90 weight percent.

3. The resin composition according to claim 1 wherein the unsaturated polyester has a weight average molecular weight of less than 1000.

4. The resin composition according to any one of claims 1 to 3 wherein the unsaturated polyester is derived from a dihydric alcohol.

5. The resin composition according to any one of claims 1 to 4 wherein the unsaturated polyester is derived from a dihydric alcohol of the group consisting of bisphenol A, ethylene glycol, 1,2-propylene glycol, 1,3-propylene glycol, 1,6-hexanediol, 1,4-butanediol, diethylene glycol, di-1,2-propylene glycol, neopentyl glycol, and mixtures thereof, preferably wherein the unsaturated polyester is derived from a dihydric alcohol of the group consisting of bisphenol A, ethylene glycol, propylene glycol, 1,6-hexanediol and 1,4-butanediol.

6. The resin composition according to claim 1, 2 or 3, wherein the unsaturated polyester is derived from a bisphenolic type epoxy compound.

7. The resin composition according to claim 1, 2 or 3, wherein the unsaturated polyester is derived from an epoxy novolac.

8. The resin composition according to claim 1, 2 or 3, wherein the unsaturated polyester is derived from an aliphatic epoxy resin or an alicyclic epoxy resin.

9. The resin composition according to any one of claims 1 to 8 wherein the concentration of reactive monofunctional (meth)acrylate monomer or oligomer is from 0.5 weight percent to 20 weight percent of the resin composition.

10. The resin composition according to any one of claims 1 to 9 wherein the concentration of the reactive multifunctional (meth)acrylate monomer is from 10 weight percent to 60 weight percent of the resin composition.

11. The resin composition according to any one of claims 1 to 10 wherein the reactive multifunctional (meth)acrylate monomer is 1,6-hexanediol diacrylate.

12. The resin composition according to claim 11 wherein the concentration of the 1,6-hexanediol diacrylate is from 10 weight percent to 60 weight percent of the resin composition.

13. The resin composition according to any one of claims 1 to 12, wherein the unsaturated polyester is based on an ester selected from the group consisting of a vinyl ester, a novolac ester, and isophthalic ester, unsaturated polyester silicone hybrid, or mixtures thereof.

## Patentansprüche

1. Eine ungesättigte Polyesterharzzusammensetzung, umfassend:
(a) einen ungesättigten Polyester,
(b) ein reaktives multifunktionelles (Meth)acrylatmonomer und
(c) ein reaktives monofunktionelles (Meth)acrylatmonomer oder -oligomer,
wobei die Harzzusammensetzung im Wesentlichen frei von Styrol- und Acetoacetatfunktionellen Monomeren ist, und wobei das reaktive monofunktionelle (Meth)acrylatmonomer oder -oligomer ausgewählt ist aus der Gruppe bestehend aus Allyl(meth)acrylat, Cyclohexyl(meth)acrylat und Tetrahydrofurfuryl(meth)acrylat.

2. Die Harzzusammensetzung gemäß Anspruch 1, wobei die Konzentration des ungesättigten Polyesters 10 Gew.-% bis 90 Gew.-% beträgt.

3. Die Harzzusammensetzung gemäß Anspruch 1, wobei der ungesättigte Polyester eine gewichtsmittlere Molmasse von weniger als 1000 besitzt.

4. Die Harzzusammensetzung gemäß einem der Ansprüche 1 bis 3, wobei der ungesättigte Polyester von einem zweiwertigen Alkohol abgeleitet ist.

5. Die Harzzusammensetzung gemäß einem der Ansprüche 1 bis 4, wobei der ungesättigte Polyester abgeleitet ist von einem zweiwertigen Alkohol aus der Gruppe bestehend aus Bisphenol A, Ethylenglycol, 1,2-Propylenglycol, 1,3-Propylenglycol, 1,6-Hexandiol, 1,4-Butandiol, Diethylenglycol, Di-1,2-propylenglycol, Neopentylglycol und Mischungen davon, vorzugsweise wobei der ungesättigte Polyester abgeleitet ist von einem zweiwertigen Alkohol aus der Gruppe bestehend aus Bisphenol A, Ethylenglycol, Propylenglycol, 1,6-Hexandiol und 1,4-Butandiol.

6. Die Harzzusammensetzung gemäß Anspruch 1, 2 oder 3, wobei der ungesättigte Polyester abgeleitet ist von einer Epoxidverbindung vom Bisphenol-Typ.

7. Die Harzzusammensetzung gemäß Anspruch 1, 2 oder 3, wobei der ungesättigte Polyester abgeleitet ist von einem Epoxid-Novolak.

8. Die Harzzusammensetzung gemäß Anspruch 1, 2 oder 3, wobei der ungesättigte Polyester abgeleitet ist von einem aliphatischen Epoxidharz oder einem alicyclischen Epoxidharz.

9. Die Harzzusammensetzung gemäß einem der Ansprüche 1 bis 8, wobei die Konzentration an reaktivem monofunktionellem (Meth)acrylatmonomer oder -oligomer 0,5 Gew.-% bis 20 Gew.-% der Harzzusammensetzung beträgt.

10. Die Harzzusammensetzung gemäß einem der Ansprüche 1 bis 9, wobei die Konzentration des reaktiven multifunktionellen (Meth)acrylatmonomers 10 Gew.-% bis 60 Gew.-% der Harzzusammensetzung beträgt.

11. Die Harzzusammensetzung gemäß einem der Ansprüche 1 bis 10, wobei das reaktive multifunktionelle (Meth)acrylatmonomer 1,6-Hexandioldiacrylat ist.

12. Die Harzzusammensetzung gemäß Anspruch 11, wobei die Konzentration des 1,6-Hexandioldiacrylats 10 Gew.-% bis 60 Gew.-% der Harzzusammensetzung beträgt.

13. Die Harzzusammensetzung gemäß einem der Ansprüche 1 bis 12, wobei der ungesättigte Polyester auf einem Ester basiert, der ausgewählt ist aus der Gruppe bestehend aus einem Vinylester, einem Novolakester, und einem Isophthalsäureester, einem Hybrid aus ungesättigtem Polyester/Silikon oder Mischungen davon.

## Revendications

1. Composition de résine polyester insaturée comprenant :
(a) un polyester insaturé,
(b) un monomère (méth)acrylate multifonctionnel réactif ; et
(c) un monomère ou un oligomère (méth)acrylate monofonctionnel réactif,
où la composition de résine est essentiellement exempte de monomères styrène et acétoacétate fonctionnels et où le monomère ou l'oligomère (méth)acrylate monofonctionnel réactif est sélectionné dans le groupe consistant en le (méth)acrylate d'allyle, le (méth)acrylate de cyclohexyle et le (méth)acrylate de tétrahydrofurfuryle.

2. Composition de résine selon la revendication 1, où la concentration en le polyester insaturé va de 10 pour cent en poids à 90 pour cent en poids.

3. Composition de résine selon la revendication 1, où le polyester insaturé a une masse moléculaire moyenne en poids inférieure à 1 000.

4. Composition de résine selon l'une quelconque des revendications 1 à 3, où le polyester insaturé est dérivé d'un alcool dihydrique.

5. Composition de résine selon l'une quelconque des revendications 1 à 4, où le polyester insaturé est dérivé d'un alcool dihydrique du groupe consistant en le bisphénol A, l'éthylène glycol, le 1,2-propylène glycol, le 1,3-propylène glycol, le 1,6-hexanediol, le 1,4-butanediol, le diéthylène glycol, le di-1,2-propylène glycol, le néopentyl glycol et des mélanges de ceux-ci, de préférence où le polyester insaturé est dérivé d'un alcool dihydrique du groupe consistant en le bisphénol A, l'éthylène glycol, le propylène glycol, le 1,6-hexanediol et le 1,4-butanediol.

6. Composition de résine selon la revendication 1, 2 ou 3, où le polyester insaturé est dérivé d'un composé époxy de type bisphénolique.

7. Composition de résine selon la revendication 1, 2 ou 3, où le polyester insaturé est dérivé d'un novolac époxy.

8. Composition de résine selon la revendication 1, 2 ou 3, où le polyester insaturé est dérivé d'une résine époxy aliphatique ou d'une résine époxy alicyclique.

9. Composition de résine selon l'une quelconque des revendications 1 à 8, où la concentration en le monomère ou l'oligomère (méth)acrylate monofonctionnel réactif représente de 0,5 pour cent en poids à 20 pour cent en poids de la composition de résine.

10. Composition de résine selon l'une quelconque des revendications 1 à 9, où la concentration en le monomère (méth)acrylate multifonctionnel réactif représente de 10 pour cent en poids à 60 pour cent en poids de la composition de résine.

11. Composition de résine selon l'une quelconque des revendications 1 à 10, où le monomère (méth)acrylate multifonctionnel réactif est le diacrylate de 1,6-hexanediol.

12. Composition de résine selon la revendication 11, où la concentration en le diacrylate de 1,6-hexanediol représente de 10 pour cent en poids à 60 pour cent en poids de la composition de résine.

13. Composition de résine selon l'une quelconque des revendications 1 à 12, où le polyester insaturé est basé sur un ester sélectionné dans le groupe consistant en un ester vinylique, un ester de novolac et un ester isophtalique, un hybride polyester insaturé et silicone ou des mélanges de ceux-ci.
